# EUROPEAN PATENT APPLICATION

(11) **EP 1 246 104 A1**
(43) Date of publication of application: **02.10.2002**
(21) Application number: 02076046.8
(22) Date of filing: 18.03.2002
(51) Int. Cl.: G06F 17/60, G07F 19/00, G11B 20/00

(54) **Credit or debit copy-protected optical disc**

(30) Priority: 28.03.2001 US 819231
(71) Applicant: EASTMAN KODAK COMPANY, Rochester, New York 14650 (US)
(72) Inventor: Inchalik, Michael A., Eastman Kodak Company P.L.S., Rochester, New York 14650-2201 (US); Barnard, James A., Eastman Kodak Company P.L.S., Rochester, New York 14650-2201 (US)
(74) Representative: Nunney, Ronald Frederick Adolphe

(57) **Abstract**

A credit or debit copy-protected optical disc for use with a CD-ROM drive to provide for payment over a network to a seller of supplies or services comprising: a hybrid optical disc having a ROM portion and a RAM portion; the ROM portion including a preformed identification signature which is impressed into the ROM portion of the hybrid optical disc and is arranged to be difficult for a pirate to copy; and the RAM portion being adapted to be written on to include user-specific encrypted information which makes the hybrid optical disc unique or personalized for a specific user and in combination with the ROM preformed identification signature provides a user-personalized secure signature that permits a user to communicate over the network to make payment for ordered products or services with a high degree of assurance that the information on the optical disc is secure from piracy.

## Description

The present invention relates to a secure optical copy-protected disc.

Credit cards and related materials (debit cards, cash cards) find widespread use in modem society. They can be a convenient replacement to carrying large amounts of cash. They can also enable long-distance commerce, such as electronic commerce, in which the use of cash would be almost impossible.

However, they have a distinct disadvantage in long-distance commerce. In personal transactions, the buyer uses the card itself in the transaction. In long-distance commerce, the buyer merely provides pertinent information that is printed on the card. This opens up the possibility of abuse of the card by another person who has obtained the information on the card, but not the card itself. The owner of the card may not even be aware of this theft, since the card remains in his or her possession, and may only find out weeks later when a number of illicit charges appear on their bill.

Credit cards today do include coded information recorded on a magnetic stripe on the back of the card. While this is convenient for personal shopping, as most merchants have readers for the stripe, such equipment is generally not available to the consumer who is shopping from home.

It is therefore an object of the present invention to provide a secure credit or debit card.

It is a further object of the present invention to provide for payment by using a credit card in long-distance commerce over a network that is highly protected and provides a user with a high degree of confidence that payment information is secure.

It is a further object of the present invention to provide a credit card that can be used with commercially available computer equipment at a user's work or home facility.

These objects are achieved by a credit or debit copy-protected optical disc for use with a CD-ROM drive to provide for payment over a network to a seller of supplies or services comprising:
(a) a hybrid optical disc having a ROM portion and a RAM portion;
(b) the ROM portion including a preformed identification signature which is impressed into the ROM portion of the hybrid optical disc and is arranged to be difficult for a pirate to copy; and
(c) the RAM portion being adapted to be written on to include user-specific encrypted information which makes the hybrid optical disc unique for a specific user and in combination with the ROM preformed identification signature provides a user-personalized secure signature that permits a user to communicate over the network to make payment for ordered products or services with a high degree of assurance that the information on the optical disc is secure from piracy.

This invention permits a user to pay electronically, after verifying the authenticity of the user. It is a feature of the present invention that a pirate will have great difficulty in having an illicit payment charged to a user, since a user's charge number and expiration date is insufficient information to authorize payment. The hybrid optical disc itself must be used to authorize payment.

An additional advantage of using the card itself as verification is that the card number can be a much longer number stored on the card itself.

It is a feature of the present invention that the hybrid optical credit card is highly copy-protected, and that the signature is highly protected, since the signature in the ROM portion is difficult to duplicate, and the user-specific information in the RAM portion is encrypted. Because of these two features, it is very difficult for a pirate to duplicate a disc or create a disc that would otherwise permit theft of product or services.

Further advantages include additional security measures that are available as a result of the high data storage capacity (compared to a magnetic stripe on today's credit cards). User-selected personal information in a series of questions can be encrypted on the card to be used as a check later on (for example "What is your mother's maiden name?" or "What breed of dog do you own?"). Examples of other security measures that can be added include a voiceprint of the cardholder, which can be compared to a "live" voiceprint at the time of use.

User benefits of such a system can include ease of use. For purchases, the users do not need to enter their name, address, or any other information. This can all be included on the card and transmitted automatically from any computer that has a CD reader. It is also possible for this to be used as a preloaded anonymous cash card from a home computer. No special equipment, such as that needed to read magnetic stripe cash cards or SmartCards, is necessary.
FIG. 1a shows an embodiment of a credit or debit copy-protected optical disc;
FIG. 1b shows a schematic diagram of a substitution scheme of encryption;
FIG. 1c shows a schematic diagram of a simple hiding scheme of encryption;
FIG. 1d shows a schematic diagram of a more complex hiding scheme of encryption;
FIG. 2a shows a method of forming a secure signature;
FIG. 2b is a schematic view of how the various software routines interact to verify authenticity and decrypt the encrypted data in a secure manner;
FIG. 3 is a schematic diagram of the software technique to encrypt the client application in a non-copyable way;
FIG. 4 is a block diagram that shows a method of manufacturing the optical part of an optical credit card;
FIG. 5 shows another embodiment of this invention as an optical cash-equivalent card;
FIG. 6 is a block diagram that shows a method of manufacturing an optical cash-equivalent card;
FIG. 7 is a schematic diagram of the use of this invention over a network connection;
FIG. 8 is a block diagram showing the basic process by which the end-user would use a card according to this invention over a network connection;
FIG. 9a is a block diagram showing more details of the secure steps in the connection and purchasing process;
FIG. 9b is a block diagram showing more details of the secure steps in the connection and purchasing process in which interactive questions are asked by the remote site;
FIG. 9c is a block diagram showing more details of the secure steps in the connection and purchasing process in which interactive questions are asked locally;
FIG. 9d is a block diagram showing an example of interactive questions;
FIG. 10 is a block diagram showing a way of managing financial transactions if the card is used as a credit card or debit card;
FIG. 11a is a block diagram showing one way of managing financial transactions if the card is used as a cash card;
FIG. 11b is a block diagram showing another way of managing financial transactions if the card is used as a cash card;
FIG. 12 is a schematic showing the public keys available for encryption and their complementary private keys; and
FIG. 13 is a block diagram which shows how the public and private keys are used in this invention to create a secure channel f preformed identification signature or communication for transmitting the card identification.

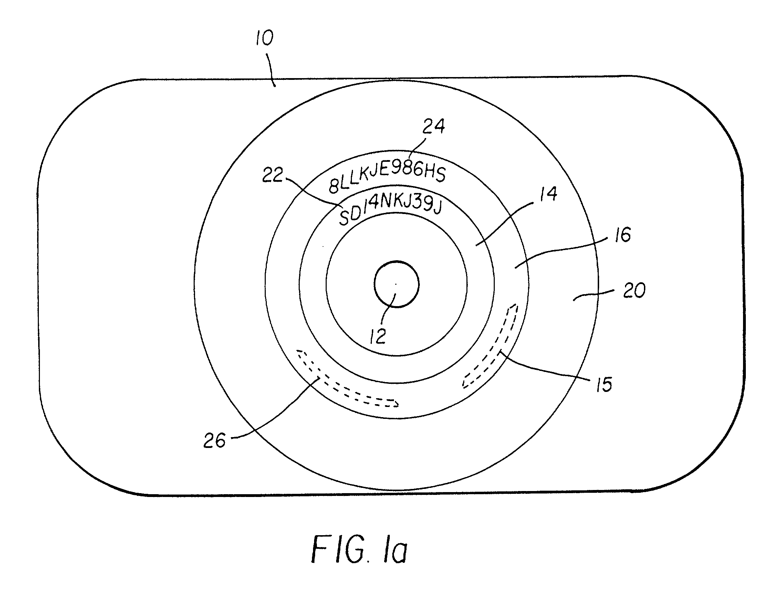

Turning now to FIG. 1a, we see a first embodiment in accordance with this invention. This is a hybrid optical disc that can function as a credit-type card. It is a credit or debit copy-protected optical disc 10 that is a hybrid optical disc; that is, it includes both a mastered pre-recorded area, also known as a ROM portion 14, and a recordable area, also known as a RAM portion 16. The credit or debit copy-protected optical disc 10 can be in various sizes or shapes, for example a disc, a square card, or a card the size and shape of a credit card, so long as it is of a size and symmetry to be usable in a conventional optical disc drive (for example CD-ROM, CD-R, DVD, and so forth). It has a hole 12 for a central spindle to spin the credit or debit copy-protected optical disc 10. ROM portion 14 is a mastered session; that is, a master disc was created including supplied software or data in the first session, and was subsequently used, either directly or through intermediate "Father" and "Mother" discs-to stamp multiple uncustomized copies of the disc. RAM portion 16 can be a written session, or can be a writeable area within ROM portion 14 utilizing the techniques for creating and writing such areas. The credit or debit copy-protected optical disc 10 can also include further writeable area 20, which can be written on using a standard optical disc writer (for example CD-R, CD-RW).

The credit or debit copy-protected optical disc 10 further includes a preformed identification number or preformed identification signature 22, which is a digital signal recorded during the mastering process and subsequently pressed into each credit or debit copy-protected optical disc 10. Preformed identification signature 22 is recorded in such a way (for example in the ATIP signal) as to make it difficult for a pirate to copy. The credit or debit copy-protected optical disc 10 further includes a unique identification number or unique ID, also known as user-specific encrypted information 24, that is written in one or more known absolute sector addresses in an encrypted manner. User-specific encrypted information 24 serves to make each credit or debit copy-protected optical disc 10 unique or personalized by virtue of the fact that each user-specific encrypted information 24 written to the credit or debit copy-protected optical disc 10 is a unique combination of numbers and/or letters and other characters. While user-specific encrypted information 24 in RAM portion 16 is shown in the second session, it will be understood that it can be written into another session. The credit or debit copy-protected optical disc 10 can further include an encrypted client application package 26 and other user-specific personalized information 15 (for example name, address, and so forth.) which can optionally be encrypted.

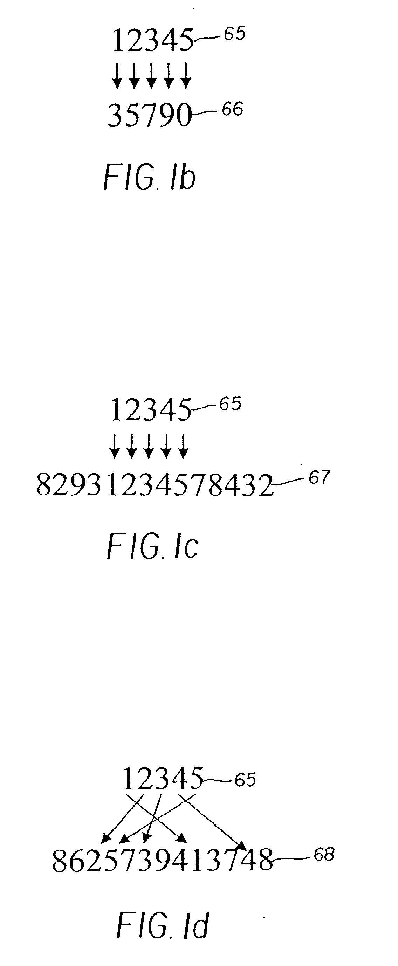

By written in an encrypted manner, we mean written in such a way that the contents are not clear to a reader who does not know how the data is stored. Turning now to FIG. 1b, 1c, and 1d, we see schematic diagrams of several example methods of encryption. FIG. 1b shows a substitution scheme in which the symbols of unique identification 65 are replaced, on an individual basis or in blocks, with other symbols or groups of symbols. FIG. 1c shows a simple hiding scheme in which unique identification 65 is hidden among a longer series of symbols. Its position and length must be known to effect decryption. FIG. 1d shows a more complex hiding scheme in which the symbols of unique identification 65 are scrambled, either individually or in groups, and hidden among a larger series of symbols. This invention can use one or more of these or other schemes to write user-specific encrypted information 24 in an encrypted manner to RAM portion 16 of credit or debit copy-protected optical disc 10.

Turning now to FIG. 2a, we see one method of forming a secure signature. Preformed identification signature 22 and user-specific encrypted information 24 are concatenated to provide user-personalized secure signature 8. As will become clear herein after, the user-personalized signature 8 permits a user to communicate over the network to make payment for ordered products or services with a high degree of assurance that the information on the optical disc is secure from piracy.

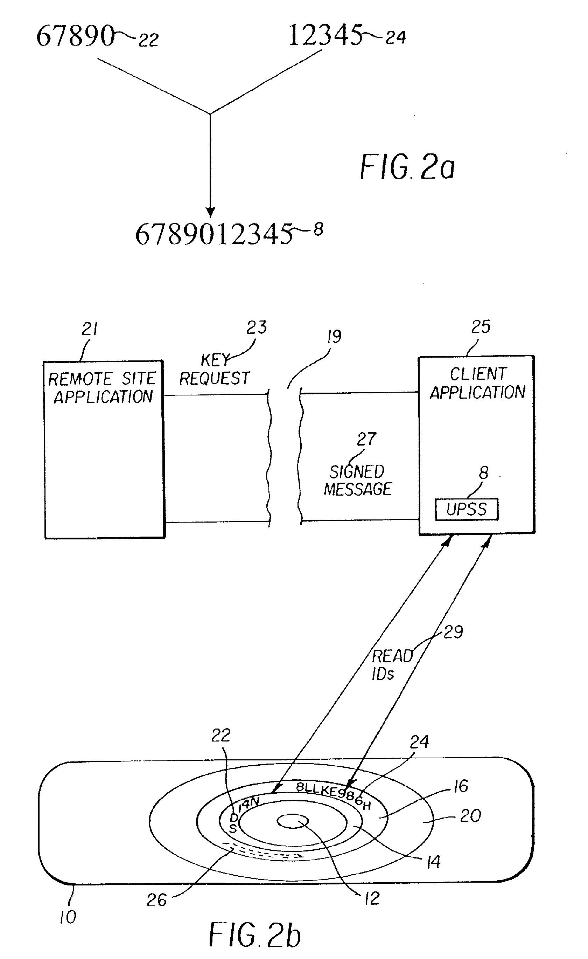

Turning now to FIG. 2b, we see a schematic view of one way that the authentication is done in a secure manner. This can be effected by using two routines which can communicate with each other from physically-separated but connected computers, that is over a network 19 (for example the Internet) in a secure manner. The first routine is commerce site application or remote site application 21, which exists on the commerce site or a support site, and can verify the authenticity of credit or debit copy-protected optical disc 10. The second routine is client application 25, which is originally encrypted on credit or debit copy-protected optical disc 10 as encrypted client application package 26. Client application 25 is designed to read (step 29) preformed identification signature 22 and user-specific encrypted information 24 from credit or debit copy-protected optical disc 10, create user-personalized secure signature 8, and send it in a secure message to remote site application 21. Remote site application 21 first sends key request 23, for a decryption key, to client application 25. This transmission takes place over network 19 via any of a number of well-known protocols (for example TCP/IP, secure TCP/IP). Included in key request 23 is a message to use one of a number of private keys to sign the message when answering the request. Client application 25 returns the card number (for example user-specific encrypted information 24 or user -
personalized secure signature 8) to remote site application 21 in signed message 27, which is signed with a private key. Remote site application 21 possesses the corresponding public key, and can verify the authenticity of the signed message 27, and therefore of credit or debit copy-protected optical disc 10.

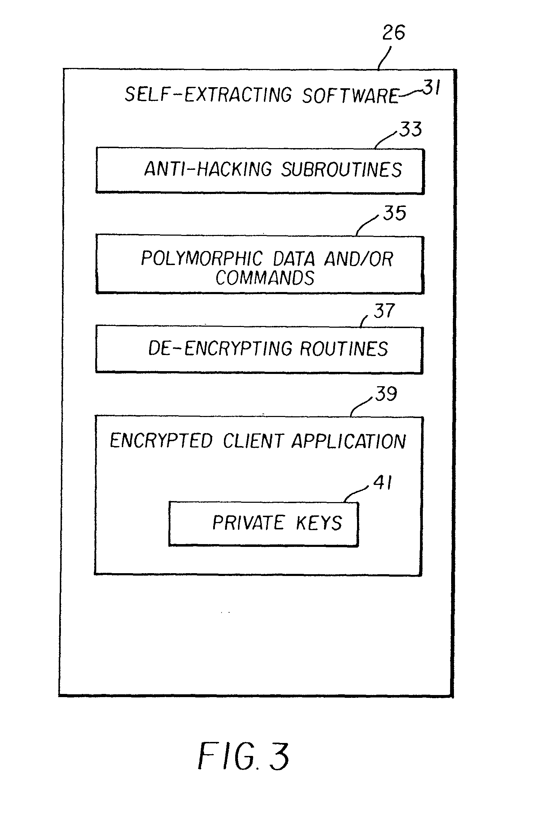

Turning next to FIG. 3, we see a diagram of one way of encrypting client application 25 for use in this invention. Encrypted client application package 26 is written to credit or debit copy-protected optical disc 10. It includes client application 25, which has been encrypted as encrypted client application 39. Encrypted client application package 26 appears as a single executable program and includes self-extracting software 31, which runs first. The encrypted client application package 26 also includes anti-hacking routines 33 to check for the presence of hacking software (for example kernel debuggers, SCSI debuggers, and device emulators) in memory when the program is run. There can also be a section of polymorphic data and/or commands 35. Polymorphic code generally provides multiple paths which achieve the same results, but are constructed in such a way that a program follows a different path each time it executes. Polymorphic code is used to make the program more difficult to reverse-engineer. De-encrypting routines 37 are designed to use data on credit or debit copy-protected optical disc 10 (preformed identification signature 22 and user-specific encrypted information 24) to de-encrypt the encrypted client application 39. Encrypted client application package 26 also includes a private keys area 41, which includes private encryption keys that are used to verify the authenticity and integrity of credit or debit copy-protected optical disc 10 in a secure manner by utilizing public key encryption.

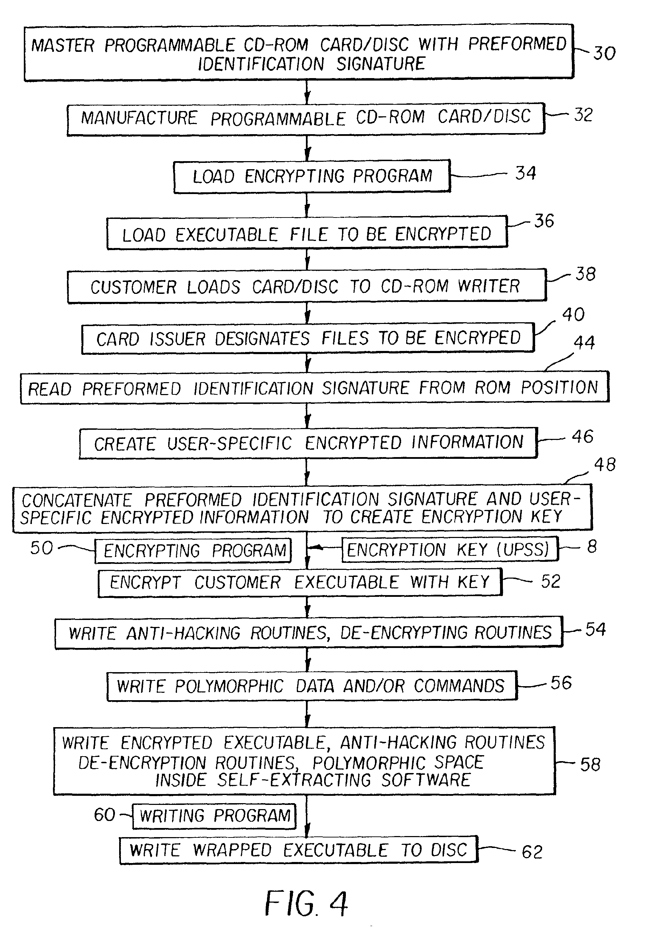

Turning now to FIG. 4, we see a block diagram showing one method for producing the optical part of optical credit-type cards. A credit or debit copy-protected optical disc 10 is mastered (step 30) using any of several well known mastering techniques for mastering hybrid optical discs. The hybrid optical disc master includes a first (mastered) session 14, although it can also include other mastered sessions as well. Included in the master disc is preformed identification signature 22. The master disc is then used in step 32 for the manufacture of credit or debit copy-protected optical discs 10 by standard stamping methods. At this point, a large number of identical credit or debit copy-protected optical discs 10 exist.

In step 34, the encrypting program 50, which can be mastered onto credit or debit copy-protected optical disc 10 or located on a local hard drive or on a distributed network, is read into the memory of a computer. In step 36, client application 25 is read into memory. The card issuer, here defined as a person or entity using credit or debit copy-protected optical disc 10 to make credit or cash cards, puts credit or debit copy-protected optical disc 10 into the optical disc writer in step 38.

The card issuer designates the files to be encrypted (step 40). The value of preformed identification signature 22 is read from credit or debit copy-protected optical disc 10 (step 44) and user-specific encrypted information 24 is created (step 46). When the security software has obtained preformed identification signature 22 and user-specific encrypted information 24, it concatenates them in step 48 to create user-personalized secure signature 8, which also serves as the encryption key. Encrypting program 50 uses user-personalized secure signature 8 with client application 25 in step 52 to create the encrypted client application 39. The files that were encrypted in step 52 are then added as data files to self-extracting software 31 in step 58. Self-extracting software 31 includes the subroutines required to read preformed identification signature 22 and user-specific encrypted information 24 from credit or debit copy-protected optical disc 10, anti-hacking routines 33 to detect the presence of reverse engineering tools (for example kernel debuggers, SCSI debuggers, device emulators) in the memory of the computer. When the program is running the anti-hacking routines stop execution if reverse-engineering tools are detected. Self-extracting software 31
also includes de-encrypting routines 37 that decrypt and launch the execution of the software application. In step 62, writing program 60 writes encrypted client application package 26 to credit or debit copy-protected optical disc 10 in RAM portion 16.

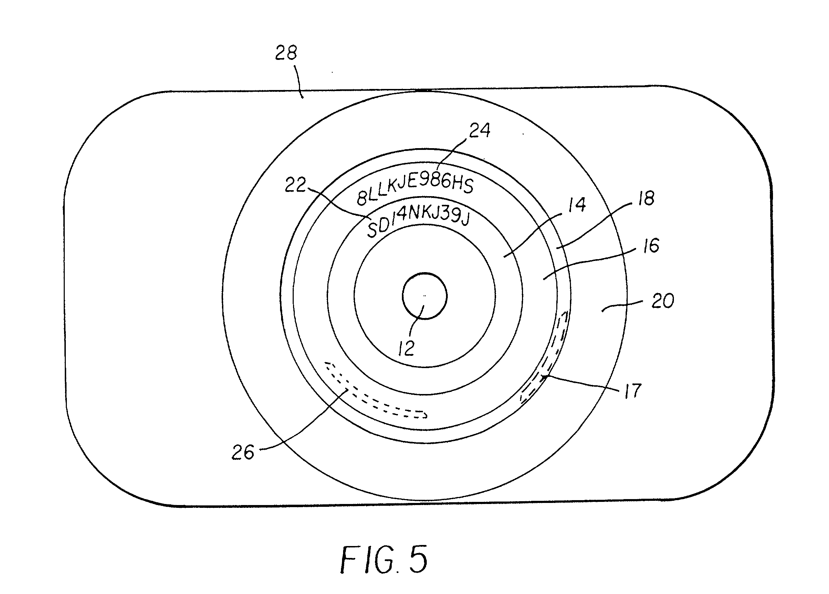

Turning now to FIG. 5, we see another embodiment in accordance with this invention. This is a hybrid optical disc that can be used as a prepaid-cash-type card with the value stored on the disc itself. The credit or debit copy-protected optical disc 28 includes both a mastered pre-recorded area, also known as a ROM portion 14, a recordable area, also known as writeable area 20, and an area of written data, also known as RAM portion 16 that serves as an individual security area. It has a hole 12 for a central spindle to spin the credit or debit copy-protected optical disc 28. ROM portion 14 is a mastered session; that is, a master disc was created including supplied software or data in the first session, and was subsequently used, either directly or through intermediate "Father" and "Mother" discs-to stamp multiple uncustomized copies of credit or debit copy-protected optical disc 28. Credit or debit copy-protected optical disc 28 also includes at least one written (value) area 18 that serves to record the cash or equivalent value 17 remaining.

The credit or debit copy-protected optical disc 28 further includes a preformed identification number or preformed identification signature 22, which is a digital signal recorded during the mastering process and subsequently pressed into each credit or debit copy-protected optical disc 28. The credit or debit copy-protected optical disc 28 further includes a unique identification number or unique ID, also known as user-specific encrypted information 24 that is written in one or more known absolute sector addresses. The credit or debit copy-protected optical disc 28 further includes encrypted client application package 26.

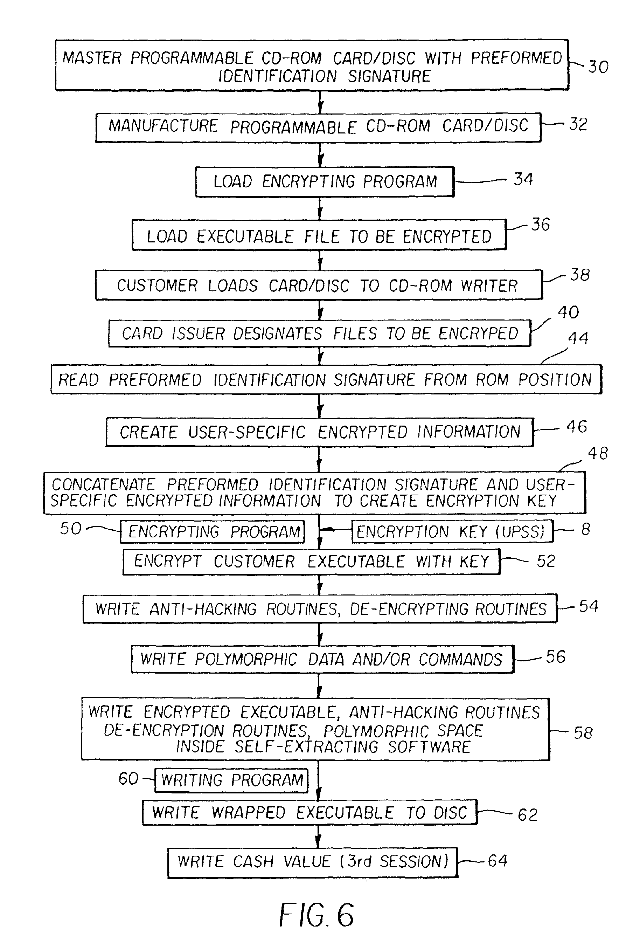

Turning now to FIG. 6, we see a block diagram showing a method for producing the optical part of optical prepaid-cash-type cards. A hybrid optical disc is mastered (step 30) using any of several well known mastering techniques for mastering compact discs. The hybrid optical disc master includes a ROM portion 14, although it can also include other mastered sessions as well. Included in the master disc is a preformed identification signature 22. The master disc is then used in step 32 for the manufacture of credit or debit copy-protected optical discs 28 by standard stamping methods. At this point, a large number of identical credit or debit copy-protected optical discs 28 exist.

In step 34, encrypting program 50, which can be mastered onto credit or debit copy-protected optical disc 28 or located on a local hard drive or on a distributed network, is read into the memory of a computer. In step 36, client application 25 is read into memory. The card issuer, here defined as a person or entity using credit or debit copy-protected optical disc 28 to make cash cards, puts credit or debit copy-protected optical disc 28 into the CD-ROM writer in step 38.

The card issuer designates the files to be encrypted (step 40). The value of preformed identification signature 22 is read from credit or debit copy-protected optical disc 28 (step 44) and user-specific encrypted information 24 is created (step 46). When the security software has obtained preformed identification signature 22 and user-specific encrypted information 24, it concatenates them in step 48 to create user-personalized secure signature 8, which also serves as the encryption key. Encrypting program 50 uses user-personalized secure signature 8 with client application 25 in step 52 to create encrypted client application 39. The files that were encrypted in step 52 are then added as data files to self-extracting software 31 in step 58. Self-extracting software 31 includes the subroutines required to read preformed identification signature 22 and user-specific encrypted information 24 from credit or debit copy-protected optical disc 28. The self-extracting software 31 also includes anti-hacking routines 33 to detect the presence of reverse engineering tools (for example kernel debuggers, SCSI debuggers, and device emulators) in the memory of the computer. When the program is running the anti-hacking routines stop execution if reverse-engineering tools are detected. Self-extracting software 31 also includes de-encrypting routines 37 that decrypt and launch the execution of the software application. In step 62, writing program 60 writes encrypted client application package 26 to credit or debit copy-protected optical disc 28 in RAM portion 16. In step 64, which can be performed at a later time, the cash or equivalent value 17 is written to credit or debit copy-protected optical disc 28 in written (value) area 18.

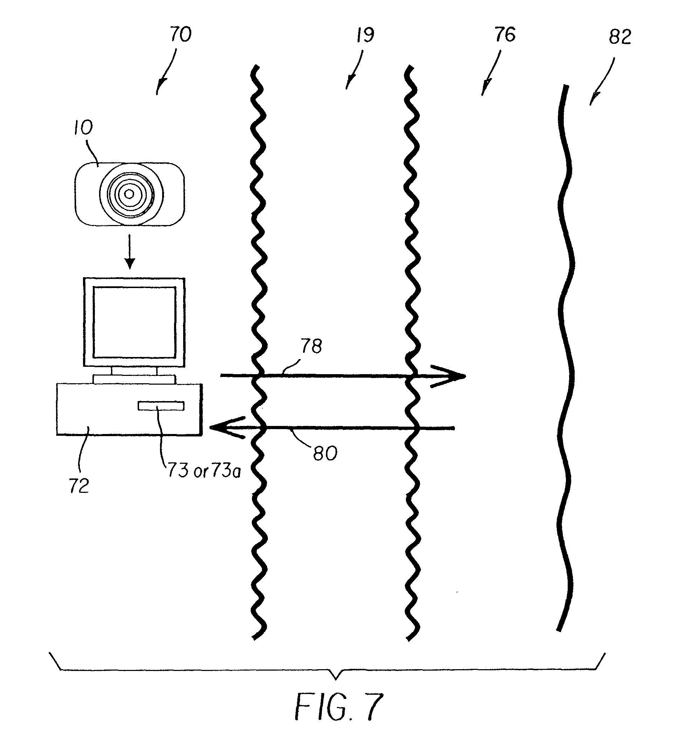

Turning now to FIG. 7, we see a schematic diagram of the use of this invention over Internet or other network 19. Personal computer 72, which includes a CD-ROM drive that can be embodied either in a CD reader 73 or CD reader/writer 73a. The CD-ROM drive can be at the end-user's home site 70, and is connected via the Internet or other network 19 to a network (commerce) site 76. Network (commerce) site 76 can also be intimately connected to support site 82 (for example a banking site or a credit card site).

To pay for a purchase, an end-user places his/her credit or debit copy-protected optical disc 10 into CD reader 73 or CD reader/writer 73a in personal computer 72. Information is transferred between credit or debit copy-protected optical disc 10 and network (commerce) site 76 via a secure connection. This information transfer can be either initiated by client application 25 on credit or debit copy-protected optical disc 10 (CD-Push operation 78) or by network (commerce) site 76 (Web-Pull operation 80). Information is also transferred between network (commerce) site 76 and support site 82. This allows the transaction to be transacted properly at the financial institution or credit clearance center.

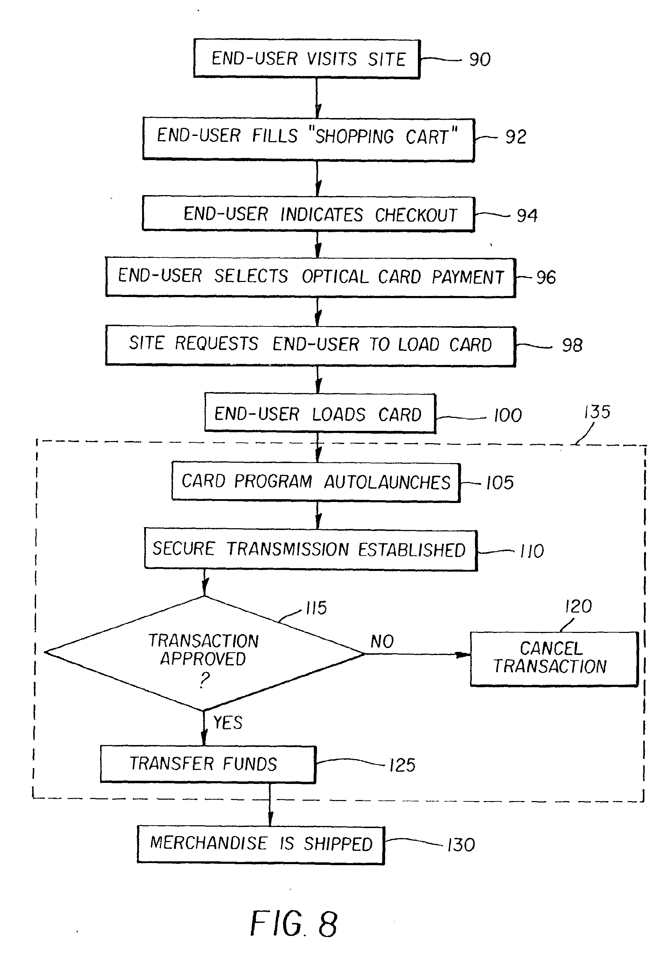

Turning now to FIG. 8, we see a block diagram showing the basic process by which the end-user would use a hybrid optical disc according to this invention over the Internet or other network 19. Initially, this follows standard steps for network shopping up to the point of selecting a payment method. For example, in step 90, an end-user visits network (commerce) site 76 and proceeds to select items to purchase (step 92) and then indicate purchase completion (step 94). At this point, the end-user can select in step 96 to make payment for ordered products or services by optical card. The site requests that the end-user load credit or debit copy-protected optical disc 10 in CD reader 73 or CD reader/writer 73a (step 98), which the end-user does (step 100).

Inclusive step 135 refers to a series of steps that will vary slightly depending upon the type of card. This will be described in further detail in this description. The general steps are that client application 25 on credit or debit copy-protected optical disc 10 autolaunches or is launched by the end-user or by network (commerce) site 76 (step 105). Client application 25 establishes a secure transmission link with network (commerce) site 76 in step 110. In step 115, network (commerce) site 76 and support site 82 can determine if the transaction will be valid financially. If it is not, the transaction is canceled (step 120). If the transaction is valid, funds are transferred (that is the user's account is debited) in step 125 and network (commerce) site 76 can ship the merchandise (step 130).

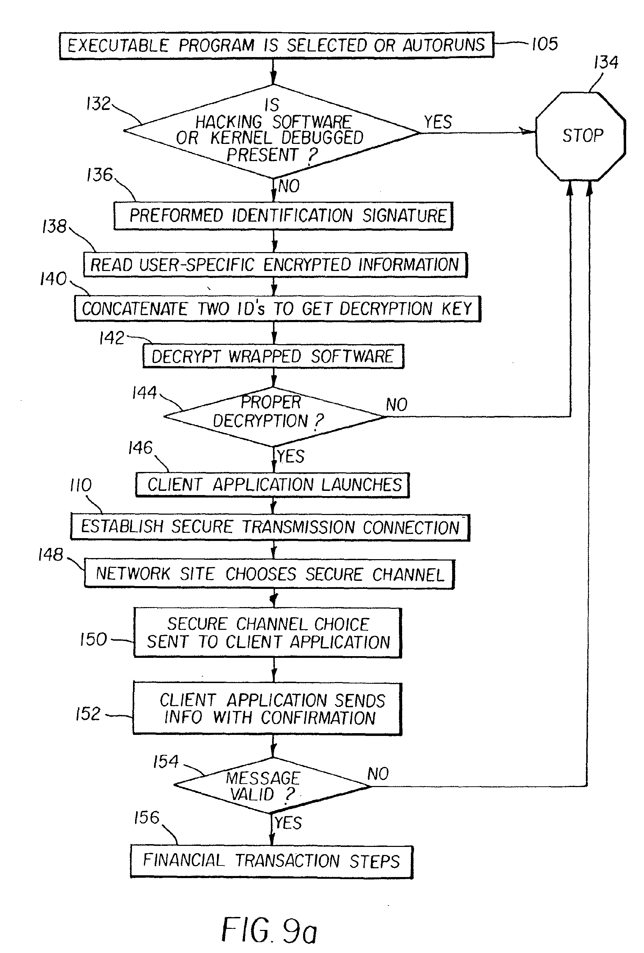

Turning now to FIG. 9a, we see a block diagram showing more details of the steps in the purchasing process and especially of providing a high degree of assurance that the information on credit or debit copy-protected optical disc 10 is secure from piracy. This was shown in less detail as block 135 in FIG. 8.

In step 105, encrypted client application package 26 is launched automatically or is selected to run. Encrypted client application package 26 includes anti-hacking routines 33 that first look (step 132) for hacking software (for example kernel debuggers, SCSI debuggers, device emulators), which would enable a pirate to follow the workings of the programs on credit or debit copy-protected optical disc 10. If this hacking software is found, the execution of the program stops (step 134). If no such software is found, the self-extracting software 31 proceeds to read preformed identification signature 22 (step 136) and user-specific encrypted information 24 (step 138). The two ID's are concatenated in step 140 to get user-personalized secure signature 8, which also serves as the decryption key that is used to decrypt the encrypted client application 39 in step 142. In step 144, if the decryption is improper, the program stops (step 134).

If the decryption is successful, client application 25 is launched in step 146. Client application 25 then establishes a secure connection with network (commerce) site 76 in step 110. Once the connection is established, a secure channel is selected from a multiplicity of such channels, each of which is a public key/private key combination. Remote site application 21 randomly chooses a secure channel from those available to it (step 148) and sends client application 25 a key request 23 for user-personalized secure signature 8 sent in a signed message 27 (step 150). Client application 25 then creates a message which includes user-personalized secure signature 8, signs the message with the private key requested by remote site application 21, and sends signed message 27 to remote site 76 (step 152).

Remote site application 21 receives signed message 27 and, in step 154, uses the selected public key to verify the identity of credit or debit copy-protected optical disc 10. If the check fails, the process stops (step 134) and no further financial transactions are performed. Presumably this is because credit or debit copy-protected optical disc 10 is counterfeit or damaged in some way. If the public-key confirms that signed message 27 is valid, and therefore credit or debit copy-protected optical disc 10 is valid, remote site application 21 and client application 25 continue with the financial transaction steps (step 156), which will be discussed in more detail below.

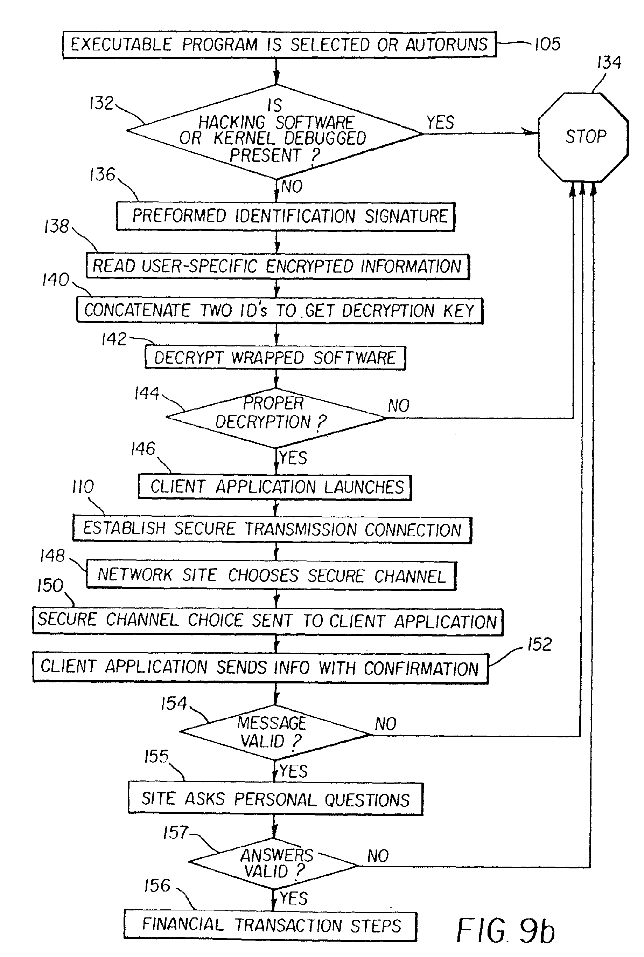

Turning now to FIG. 9b, we see a block diagram showing more details of the steps in the purchasing process in which interactive questions are asked by the remote site. These questions are used to verify the authenticity of the user. This was shown in less detail as block 135 in FIG. 8.

In step 105, encrypted client application package 26 is launched automatically or is selected to run. Encrypted client application package 26 includes anti-hacking routines 33 that first look (step 132) for hacking software (for example kernel debuggers, SCSI debuggers, device emulators), which would enable a pirate to follow the workings of the programs on credit or debit copy-protected optical disc 10. If this hacking software is found, the execution of the program stops (step 134). If no such software is found, the self-extracting software 31 proceeds to read preformed identification signature 22 (step 136) and user-specific encrypted information 24 (step 138). The two ID's are concatenated in step 140 to get user-personalized secure signature 8, which also serves as the decryption key used to decrypt encrypted client application 39 in step 142. In step 144, if the decryption is improper, the program stops (step 134).

If the decryption is successful, client application 25 is launched in step 146. Client application 25 then establishes a secure connection with network (commerce) site 76 in step 110. Once the connection is established, a secure channel is selected from a multiplicity of such channels, each of which is a public key/private key combination. Remote site application 21 randomly chooses a secure channel from those available to it (step 148) and sends client application 25 a key request 23 for user-personalized secure signature 8 sent in a signed message 27 (step 150). Client application 25 then creates a message which includes user-personalized secure signature 8, signs the message with the private key requested by remote site application 21, and sends signed message 27 to remote site 76 (step 152).

Remote site application 21 receives signed message 27 and, in step 154, uses the selected public key to verify the identity of credit or debit copy-protected optical disc 10. If the check fails, the process stops (step 134) and no further financial transactions are performed. Presumably this is because credit or debit copy-protected optical disc 10 is counterfeit or damaged in some way. If the public-key confirms that signed message 27 is valid, and therefore credit or debit copy-protected optical disc 10 is valid, remote site application 21 asks the user one or more interactive questions, which the user must answer properly to authenticate that the user is the assigned owner of the disc (step 155). If the user's answers are not valid (step 157), the process stops (step 134). If the user's answers are valid, remote site application 21 and client application 25 continue with the financial transaction steps (step 156), which will be discussed in more detail below.

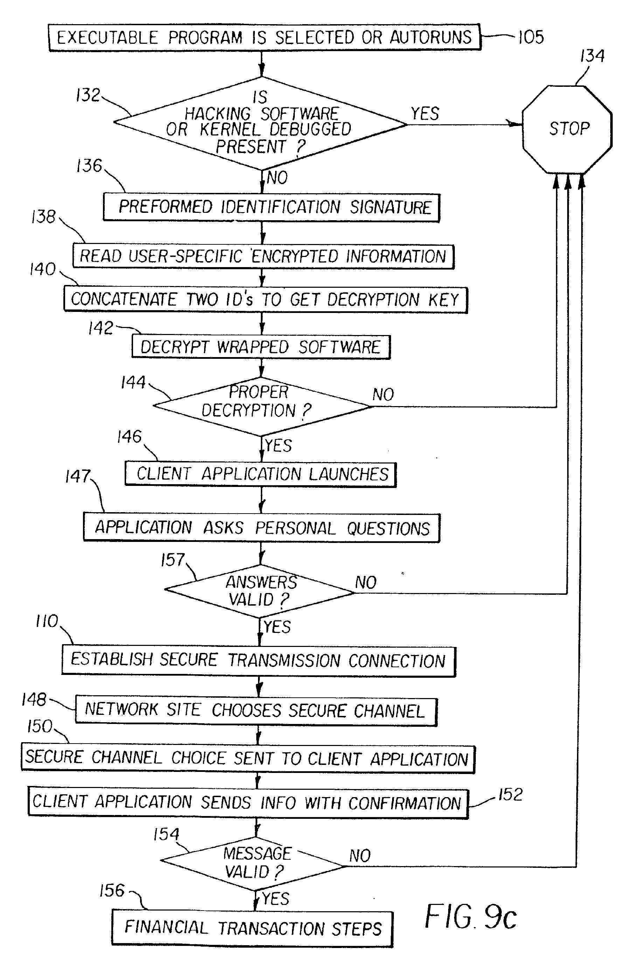

Turning now to FIG. 9c, we see a block diagram showing more details of the steps in the purchasing process in which interactive questions are asked locally and not over the network.

In step 105, encrypted client application package 26 is launched automatically or is selected to run. Encrypted client application package 26 includes anti-hacking routines 33 that first look (step 132) for hacking software (for example kernel debuggers, SCSI debuggers, device emulators), which would enable a pirate to follow the workings of the programs on credit or debit copy-protected optical disc 10. If this hacking software is found, the execution of the program stops (step 134). If no such software is found, the self-extracting software 31 proceeds to read preformed identification signature 22 (step 136) and user-specific encrypted information 24 (step 138). The two ID's are concatenated in step 140 to get user-personalized secure signature 8, which also serves as the decryption key used to decrypt encrypted client application 39 in step 142. In step 144, if the decryption is improper, the program stops (step 134).

If the decryption is successful, client application 25 is launched in step 146. Client application 25 asks the user one or more interactive questions, which the user must answer properly to authenticate that the user is the assigned owner of the disc (step 147). The answers can be stored as part of user-specific encrypted information 24 or user-specific personalized information 15. If the user's answers are not valid (step 157), the process stops (step 134). If the user's answers are valid, client application 25 then establishes a secure connection with network (commerce) site 76 in step 110. Once the connection is established, a secure channel is selected from a multiplicity of such channels, each of which is a public key/private key combination. Remote site application 21 randomly chooses a secure channel from those available to it (step 148) and sends client application 25 a key request 23 for user-personalized secure signature 8 to be sent in a signed message 27 (step 150). Client application 25 then creates a message which includes user-personalized secure signature 8, signs the message with the private key requested by remote site application 21, and sends signed message 27 to remote site 76 (step 152).

Remote site application 21 receives signed message 27 and, in step 154, uses the selected public key to verify the identity of credit or debit copy-protected optical disc 10. If the check fails, the process stops (step 134) and no further financial transactions are performed. Presumably this is because credit or debit copy-protected optical disc 10 is counterfeit or damaged in some way. If the public-key confirms that signed message 27 is valid, and therefore credit or debit copy-protected optical disc 10 is valid, remote site application 21 and client application 25 continue with the financial transaction steps (step 156), which will be discussed in more detail below.

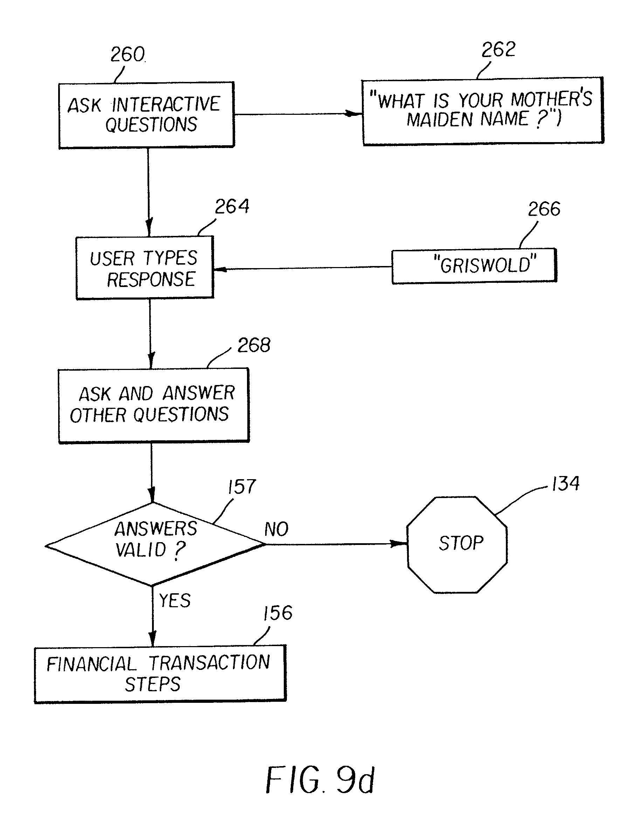

Turning now to FIG. 9d, we see a block diagram showing one example of interactive questions that can be asked of the user. In step 260, the system (remote site application 21 or client application 25) asks the user interactive question 262. In step 264, the user enters answer 266. The system can optionally ask further interactive questions 262 in step 268. If answers 266 are not valid (step 157), the process stops (step 134) and the transaction is not allowed. If answers 266 are determined to be valid, the further steps of the process are allowed (step 156).

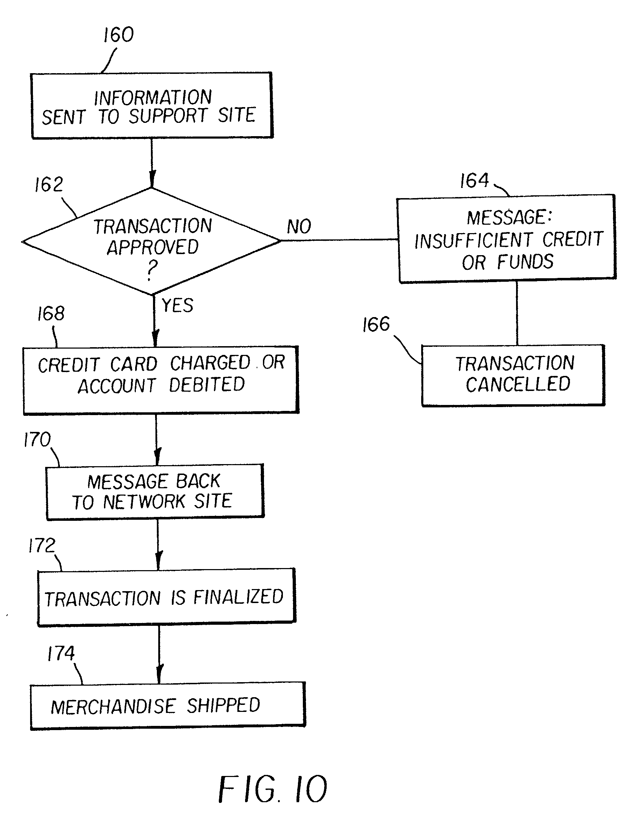

Turning now to FIG. 10, we see the financial transaction steps if the card is being used as a credit card or a debit card. In step 160, network (commerce) site 76 sends information to support site 82. This includes the card number and transaction amount, as well as any other information that support site 82 requires. Support site 82 decides if the transaction can be approved (step 162). If it cannot be approved, a message is sent back (step 164) that there is a problem, for example insufficient credit (for a credit card) or funds (for a debit card). The transaction is then cancelled (step 166).

If the transaction is approved in step 162, the credit card account is charged (for a credit account) or the associated account is debited (for a debit card) and credited to the merchant's network (commerce) site 76 in step 168. A message is sent back to network (commerce) site 76 that the financial part of the transaction has been completed (step 170). In step 172, the transaction is finalized, that is the merchandise is released for shipment to the end-user, and it is then shipped (step 174).

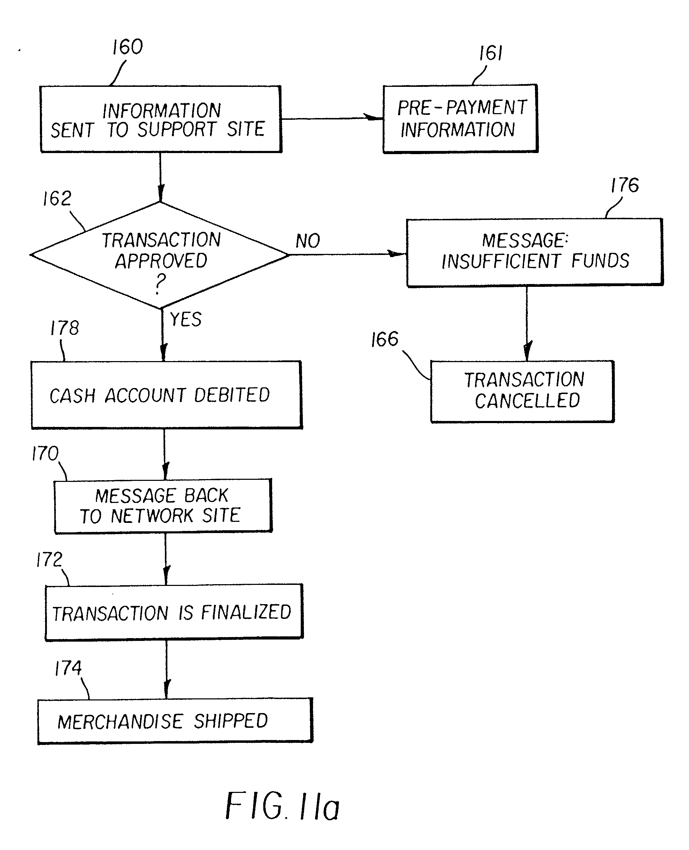

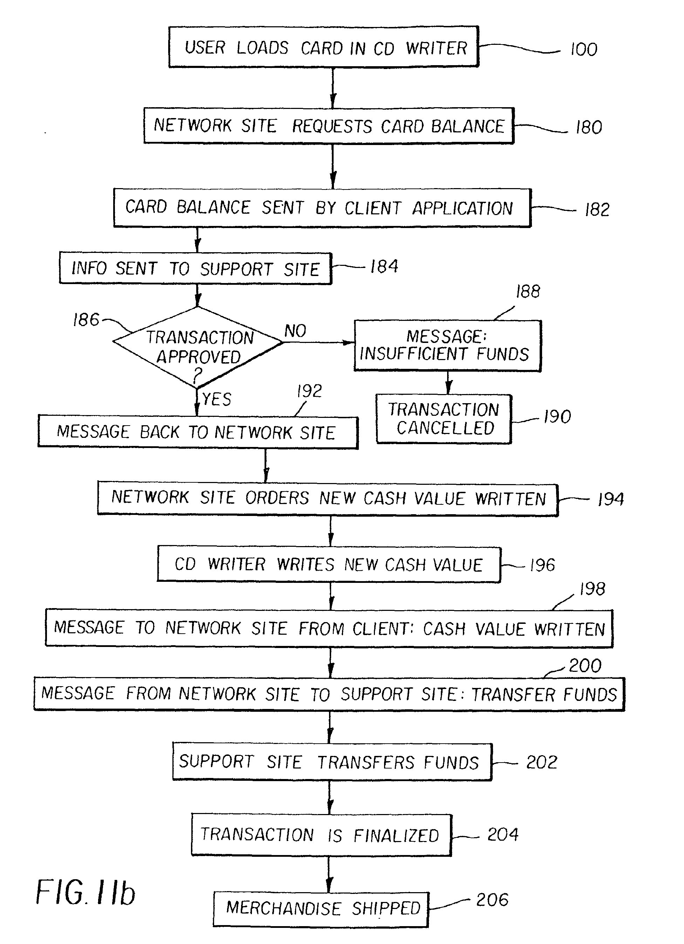

Turning now to FIG. 11a, we see the financial transaction steps if credit or debit copy-protected optical disc 10 is being used as a cash card with the cash or equivalent value stored on a central server. This is similar to the use of a credit card or debit card, but there are several possible differences. One is that the user can be anonymous; only credit or debit copy-protected optical disc 10 itself needs to be verified as authentic. Another is that the value can be other than cash (for example minutes for a service, such as telephone service). In step 160, network (commerce) site 76 sends information to support site 82. This includes the card number or user-personalized secure signature 8 and transaction amount, as well as any other information that support site 82 requires. User-personalized secure signature 8 for this type of credit or debit copy-protected optical disc 10 can include pre-payment information 161. The user-personalized secure signature 8 includes the pre-payment information 161 that permits pre-payment in whole or in part for services or products to be ordered. Pre-payment information 161 is defined as the amount of pre-payment, that is, the initial value of credit or debit copy-protected optical disc 10. This pre-payment value can be a fixed amount for a given group of discs, or can depend on the amount pre-paid by the user. Support site 82 decides if the transaction can be approved (step 162). Support site 82 can choose to accept credit or debit copy-protected optical disc 10 as full payment or as partial payment for services or products to be offered. If the transaction cannot be approved, a message is sent back (step 176) that there is a problem, for example insufficient funds remain for the card. The transaction is then cancelled (step 166).

If the transaction is approved in step 162, the cash or equivalent value is debited and credited to the merchant's network (commerce) site 76 in step 178. A message is returned to network (commerce) site 76 that the financial part of the transaction has been completed (step 170). In step 172, the transaction is finalized, that is the merchandise is released for shipment to the end-user, and it is then shipped (step 174).

As a cash card, another embodiment of this invention is to keep the current cash or equivalent value on credit or debit copy-protected optical disc 28 itself, as described above referring to FIG. 5. Turning now to FIG. 11b, we see a method for achieving this. In this particular example, the cash or equivalent value 17 already exists on credit or debit copy-protected optical disc 28 in written (value) area 18 (FIG. 5). As a preliminary step, the user must have a CD reader/writer 73a in which credit or debit copy-protected optical disc 28 is loaded in step 100a. In step 180, network (commerce) site 76 requests cash or equivalent value 17. Client application 25 reads cash or equivalent value 17 from credit or debit copy-protected optical disc 28 and sends it to network (commerce) site 76 (step 182). Network (commerce) site 76 forwards this information to support site 82 (step 184). In step 186, support site 82 decides if the transaction is approved. If it is not approved, a message is sent back, for example insufficient funds are available for the purchase or the cash funds are not available to be transferred (step 188) and the transaction is cancelled (step 190).

If the transaction is approved, a message is returned to network (commerce) site 76 stating so (step 192). In step 194, the network (commerce) site 76 orders the client application 25 to write the new cash or equivalent value, deducting the purchase funds. Upon receiving this order, client application 25 writes the new cash or equivalent value on credit or debit copy-protected optical disc 28 via CD reader/writer 73a (step 196). After new cash or equivalent value 17 is written to credit or debit copy-protected optical disc 28, client application 25 signals network (commerce) site 76 that the value has been written (step 198). When this has been accomplished, network (commerce) site 76 notifies support site 82 in step 200 that the requisite funds can be transferred. In step 202, support site 82 transfers the funds to the commerce site's account. The merchandise is released (step 204) and shipped (step 206).

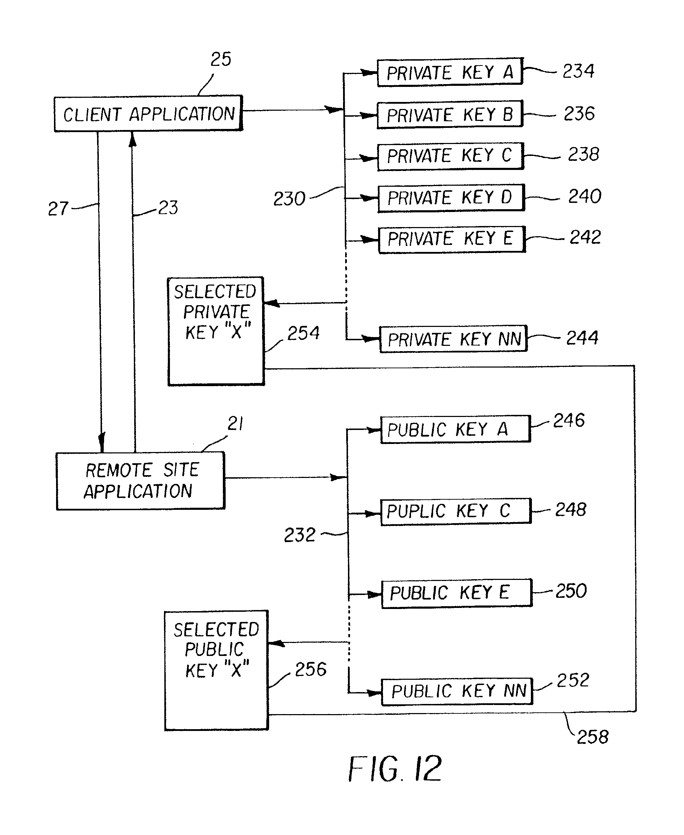

Turning now to FIG. 12, we see how the applications are endowed with secure communications keys in the form of public keys and corresponding private keys. Client application 25 has been provided with private key series 230, which is stored in private keys area 41. These private keys are capable of decrypting messages that have been encrypted with the corresponding public key, and they are also capable of signing messages in a secure way. Remote site application 21 also includes public key series 232, corresponding to private key series 230. Public key series 232 can include the entire set of keys included in private key series 230, or it can be a subset of private key series 230. The latter allows certain keys to be maintained exclusively for one application or one vendor without modifying client application 25. If the security of any key is compromised, that key can be simply removed from the remote site application 21, and the security breach is closed.

Remote site application 21 randomly selects a public key "X" from public key series 232, which gives selected public key 256. Remote site application 21 sends key request 23 to client application 25 and indicates in key request 23 which key has been selected to be selected public key 256. Client application 25 selects the corresponding private key from private key series 230 to give selected private key 254. The selected public key 256/selected private key 254 pair form public/private key channel 258. Client application 25 uses selected private key 254 to sign signed message 27 that is sent to remote site application 21.

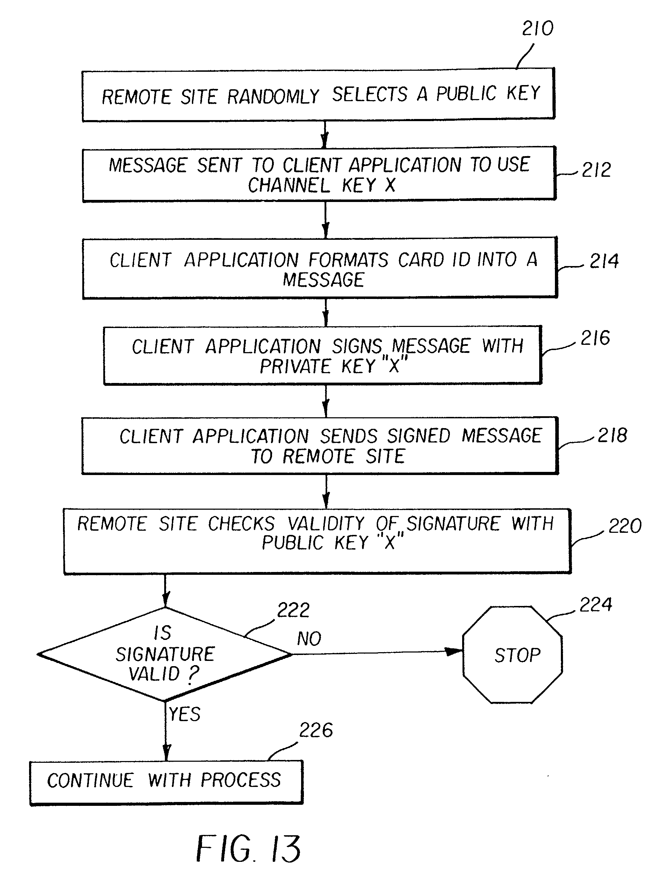

Turning now to FIG. 13, we see a block diagram showing more details of the secure method for transmitting the card ID. In step 210, network (commerce) site 76 randomly selects selected public key 256 from public key series 232. In step 212, network (commerce) site 76 sends key request 23 to client application 25 to use public/private key channel 258 (that is the random key it has selected). Client application 25 formats the card ID into a message (step 214) which it then signs with selected private key 254 (step 216). Client application 25 then sends signed message 27 to network (commerce) site 76 (step 218). Remote site application 21 receives signed message 27 and uses selected public key 256 to verify signed message 27 (step 220). If the signature is not valid (step 222), the process stops (step 224). If the signature is valid, the process then continues (step 226) as described earlier.

## Claims

1. A credit or debit copy-protected optical disc for use with a CD-ROM drive to provide for payment over a network to a seller of supplies or services comprising:
(a) a hybrid optical disc having a ROM portion and a RAM portion;
(b) the ROM portion including a preformed identification signature which is impressed into the ROM portion of the hybrid optical disc and is arranged to be difficult for a pirate to copy; and
(c) the RAM portion being adapted to be written on to include user-specific encrypted information which makes the hybrid optical disc unique for a specific user and in combination with the ROM preformed identification signature provides a user-personalized secure signature that permits a user to communicate over the network to make payment for ordered products or services with a high degree of assurance that the information on the hybrid optical disc is secure from piracy.

2. The credit or debit copy-protected optical disc according to claim 1 wherein the user-personalized secure signature includes pre-payment information which permits pre-payment in whole or in part for services or products to be ordered.

3. The credit or debit copy-protected optical disc according to claim 1 wherein the hybrid optical disc is shaped so as to be usable by a conventional optical disc drive.

4. The credit or debit copy-protected optical disc according to claim 1 wherein the RAM portion includes a series of interactive questions which solicit answers from the user to verify the authenticity of the user.

5. The credit or debit copy-protected optical disc according to claim 4 wherein the series of interactive questions and answers are provided locally and not over the network.

6. The credit or debit copy-protected optical disc according to claim 1 further including user-specific information which personalizes the hybrid optical disc for that specific user.

7. A method for providing and using a credit or debit copy-protected optical disc, comprising the steps of:
(a) providing a hybrid optical disc having a ROM portion and a RAM portion;
(b) providing the ROM portion to include a preformed identification signature which is impressed into the ROM portion of the hybrid optical disc and is arranged to be difficult for a pirate to copy;
(c) providing the RAM portion to be adapted to be written on to include user-specific encrypted information which makes the hybrid optical disc unique for a specific user and in combination with the ROM preformed identification signature provides a user-personalized secure signature that permits a user to communicate over the network to make payment for ordered products or services with a high degree of assurance that the information on the hybrid optical disc is secure from piracy; and
(d) communicating over a network the information in the ROM and RAM portions to permit payment for ordered products or services.
